(19) Europäisches Patentamt
European Patent Office
Office européen des brevets

(11) Veröffentlichungsnummer: **0 103 147**
**A2**

# (12) EUROPÄISCHE PATENTANMELDUNG

(21) Anmeldenummer: **83107718.5**

(22) Anmeldetag: **05.08.83**

(51) Int. Cl.³: **C 08 G 85/00**, C 08 G 18/32, C 08 G 18/66, C 08 G 77/60, C 08 G 63/66

(30) Priorität: **19.08.82 DE 3230771**

(43) Veröffentlichungstag der Anmeldung: **21.03.84 Patentblatt 84/12**

(84) Benannte Vertragsstaaten: **DE FR GB IT NL**

(71) Anmelder: **Th. Goldschmidt AG, Goldschmidtstrasse 100 Postfach 101461, D-4300 Essen 1 (DE)**

(72) Erfinder: **Esselborn, Eberhard, Pilotystrasse 21, D-4300 Essen 1 (DE)**
Erfinder: **Fock, Jürgen, Dr., Mörsenbroicher Weg 114, D-4000 Düsseldorf 30 (DE)**

## (54) Verfahren zur Herstellung von Polymerisaten mit seitenständig gebundenen langkettigen Alkylresten und/oder Arylresten.

(57) Verfahren zur Herstellung von Polymerisaten mit seitenständig gebundenen langkettigen Alkylresten und/oder Arylresten und gegebenenfalls ebenfalls seitenständig gebundenen Polyalkylenoxidketten, wobei man 1,2-Alkandiole mit 6 bis 20 Kohlenstoffatomen und/oder Phenylethan-1,2-diol mit in bezug auf die Hydroxylgruppen reaktiven difunktionellen Verbindungen in an sich bekannter Weise umsetzt und gegebenenfalls bis zu 75 Mol-% der Alkandiole durch Polyalkylenoxide ersetzt, die am Startalkohol zwei freie Hydroxylgruppen aufweisen.

Die Verbindungen eignen sich zum Dismulgieren, insbesondere von Erdölemulsionen, zur Entschäumung wäßriger und nichtwäßriger Systeme, als Trennmittel, Flotationshilfsmittel, Lackverlaufsmittel, Textilhilfsmittel, zur Stabilisierung von Polyurethanschäumen. Sie können ferner zur Herstellung von Polyesterhazen eingesetzt werden.

EP 0 103 147 A2

0103147

Th. G o l d s c h m i d t AG, Essen

# Verfahren zur Herstellung von Polymerisaten mit seitenständig gebundenen langkettigen Alkylresten und/oder Arylresten

Die Erfindung betrifft ein Verfahren zur Herstellung von Polymerisaten mit seitenständig gebundenen langkettigen Alkylresten und/oder Arylresten und gegebenenfalls ebenfalls seitenständig gebundenen Polyalkylenoxidketten.

Polymerisate mit seitenständig gebundenen langkettigen Resten haben sich als sehr wirkungsvolle grenzflächenaktive Verbindungen erwiesen. Polysiloxane mit seitenständig gebundenen Polyoxyalkylenketten werden als Schaumstabilisatoren bei der Herstellung von Polyurethanschäumen verwendet. Sie können auch entsprechend ihrem hydrophilen/hydrophoben Gleichgewicht als Emulgier- oder Dismulgiermittel sowie zur Schaumverhinderung oder Schaumbeseitigung in wäßrigen oder organischen Systemen verwendet werden.

In der Patentanmeldung P 31 09 700.6-44 sind Polymerisate mit seitenständig gebundenen Polyalkylenoxidketten beschrieben, die dadurch hergestellt werden können, daß man Polyalkylenoxide mit mindestens zwei freien Hydroxylgruppen am Startalkohol mit in bezug auf die Hydroxylgruppen am Startalkohol reaktiven di- oder polyfunktionellen Verbindungen, gegebenenfalls in Gegenwart von Lösungsmitteln und/oder Katalysatoren und/oder bei erhöhten Temperaturen, umsetzt. Auch diese Verbindungen zeichnen sich durch hohe Grenzflächenaktivität aus und sind auch bei höheren Molekulargewichten relativ niedrigviskos.

Aus der DE-PS 16 42 825 sind in ähnlicher Weise aufgebaute Verbindungen bekannt, bei denen Alkylphenole vorwiegend ortho-ständig mit Formaldehyd meist zu novolakartigen Verbindungen umgesetzt werden und wobei die

freien Hydroxylgruppen mit Alkylenoxid und/oder Propylenoxid umgesetzt werden. Diese Verbindungen werden zum Brechen insbesondere von Erdölemulsionen verwendet.

Die Eigenschaften derartiger sogenannter Kammpolymere werden im wesentlichen durch ihr Molekulargewicht, die Anzahl der seitenständig gebundenen höhermolekularen Reste und insbesondere durch deren hydrophiles/hydrophobes Gleichgewicht bestimmt.

Die Verwendbarkeit derartiger Kammpolymere wird zusätzlich auch durch die Struktur insbesondere der seitenständig gebundenen Ketten im Hinblick auf die Medien bestimmt, in denen die Verbindungen als grenzflächenaktive Verbindungen eingesetzt werden.

Es besteht deshalb ein Bedürfnis, Polymerisate mit seitenständig gebundenen langkettigen Alkylresten und/oder Arylresten verschiedenartiger Struktur herzustellen, um derartige Verbindungen mit tensidischen Eigenschaften für die verschiedenartigsten Verwendungszwecke und Substrate zur Verfügung zu haben.

Es ist insbesondere erwünscht, auch solche Polymerisate einzusetzen, deren höhermolekulare Seitenketten aliphatische oder aromatische Struktur aufweisen und damit stark hydrophoben Charakter haben. Des weiteren kann auf bestimmten Einsatzgebieten die Forderung bestehen, Polymerisate zu verwenden, die gleichzeitig stark hydrophile und hydrophobe Eigenschaften innerhalb eines Moleküls aufweisen.

Diese Aufgabe wird erfindungsgemäß dadurch gelöst, daß man 1.2-Alkandiole mit 6 bis 20 Kohlenstoffatomen und/oder Phenylethan-1.2-diol mit in bezug auf die Hydroxylgruppen reaktiven difunktionellen Verbindungen in an sich bekannter Weise umsetzt und gegebenenfalls bis zu 75 Mol-% der Alkandiole durch Polyalkylenoxide ersetzt, die am Startalkohol zwei freie Hydroxylgruppen aufweisen.

Die beim erfindungsgemäßen Verfahren verwendeten 1.2-Alkandiole sind in an sich bekannter Weise leicht aus den α-Olefinen durch Oxidation und Hydrolyse erhältlich. Besonders bevorzugt sind 1.2-Alkandiole mit 8 bis 16 Kohlenstoffatomen. Diese 1.2-Alkandiole und/oder das Phenylethan-1.2-diol werden nun in an sich bekannter Weise mit difunktionellen Verbindungen umgesetzt, wobei die Umsetzung der Hydroxylgruppen mit den reaktiven Gruppen der difunktionellen Verbindungen insbesondere in Form einer Additions- oder Kondensationsreaktion stattfindet.

Besonders stabile Verknüpfungen lassen sich dadurch erzielen, daß man als reaktive Verbindungen organische Diisocyanate verwendet.

Beispiele geeigneter Diisocyanate sind 2.4- und 2.6-Toluylendiisocyanat sowie Gemische dieser Isocyanate, Diphenylmethan-4.4'-diisocyanat; 1.3- und 1.4-Phenylendiisocyanat; Naphthylen-1.5-diisocyanat; 1.4-Tetramethylendiisocyanat; 1.6-Hexamethylendiisocyanat; Cyclohexan-1.3- und -1.4-diisocyanat; Isophorondiisocyanat; Umsetzungsprodukte von Trimethylolpropan mit Toluylendiisocyanat oder mit Isophorondiisocyanat; Umsetzungsprodukte von Hexamethylen-1.6-diisocyanat und Wasser.

Es ist möglich, an sich bekannte Präpolymere, z.B. Polyether- oder Polyesterpräpolymere mit zwei endständigen Isocyanatgruppen, zu verwenden. Hierdurch werden die Polyalkylenoxidketten in stärkerem Maße voneinander getrennt, und es lassen sich hierdurch in einfacher Weise die Eigenschaften der entstehenden Kammpolymere beeinflussen.

Beispiele für Kondensationsreaktionen sind die Reaktionen der $\alpha,\omega$-hydroxylgruppenhaltigen Polyalkylenoxide mit Dihalogen- oder Dialkoxysilanen oder -siloxanen.

Bevorzugt verwendet man dabei Dihalogensilane oder Dialkoxysilane, wie z.B. Dichlordimethylsilan, Dichlorphenylmethylsilan, Dimethoxydiethylsilan, Diethoxymethylvinylsilan oder Dihalogen- oder Dialkoxysiloxane, z.B. der folgenden Formel

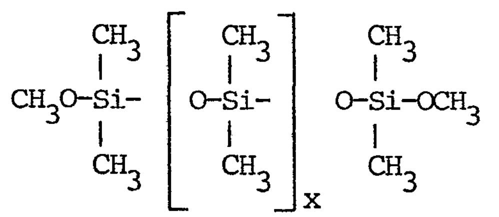

$x \geqq 1$

Bei Verwendung von Alkoxysilanen oder -siloxanen soll der Alkoxyrest nicht mehr als 4 C-Atome enthalten. Besonders bevorzugt sind die Methoxysilane oder -siloxane.

Ein weiteres bevorzugtes Beispiel der Umsetzung in Form einer Kondensationsreaktion ist die Umsetzung der α,ω-hydroxylgruppenhaltigen Polyalkylenoxide mit Dicarbonsäuren, wie z.B. Adipinsäure, Phthalsäure, Terephthalsäure oder Maleinsäure.

Es ist selbstverständlich möglich, anstelle der freien Dicarbonsäuren deren Anhydride oder Säurechloride zu verwenden. Man kann auch die Ester der Carbonsäure mit niederen aliphatischen Alkoholen mit insbesondere 1 bis 3 C-Atomen mit den als Ausgangsverbindungen dienenden Polyalkylenoxidderivaten umestern.

Die Umsetzung der 1.2-Alkandiole und/oder des Phenylethan-1.2-diols mit den reaktiven difunktionellen Verbindungen kann in Gegenwart von Lösungsmitteln erfolgen. Geeignete Lösungsmittel sind aromatische und aliphatische Kohlenwasserstoffe, wie z.B. Benzol, Toluol, Xylol, Hexan sowie Cyclohexan.

Für die Umsetzung können die für derartige Reaktionen an sich bekannten Katalysatoren eingesetzt werden. Handelt es sich bei den reaktiven difunktionellen Verbindungen um Isocyanate, kann man als Katalysatoren Amine oder organische Zinnverbindungen, wie z.B. Dibutylzinndilaurat oder Zinnoctoat, verwenden. Setzt man als difunktionelle Verbindungen Halogensilane oder -siloxane ein, verwendet man mit Vorteil Amine oder Ammoniak zum Abfangen des Halogenwasserstoffs. Die Umsetzung der Alkoxysilane oder -siloxane mit den 1.2-Alkandiolen oder dem Phenylethan-1.2-diol wird in der Regel alkalisch katalysiert. Der freigesetzte niedere Alkohol wird abdestilliert. Bei der Umsetzung der Alkandiole mit Dicarbonsäureanhydriden oder Dicarbonsäurechloriden benötigt man keinen speziellen Katalysator.

Die dabei entstehenden Verfahrensprodukte zeichnen sich durch hohe Hydrophobie und damit durch einen niederen HLB-Wert aus. Man kann in einer weiteren Ausgestaltung des erfindungsgemäßen Verfahrens die Hydrophobie der Verfahrensprodukte in sehr feiner Abstufung dadurch vermindern, daß man einen Teil der 1.2-Alkandiole oder des Phenylethan-1.2-diols, jedoch höchstens 75 Mol-%, durch Polyalkylenoxide ersetzt, die am Startalkohol zwei freie Hydroxylgruppen aufweisen. Derartige Verbindungen sind z.B. entsprechend der Patentanmeldung P 30 25 807 erhältlich. Besonders geeignet sind Polyalkylenoxide der allgemeinen

Formel

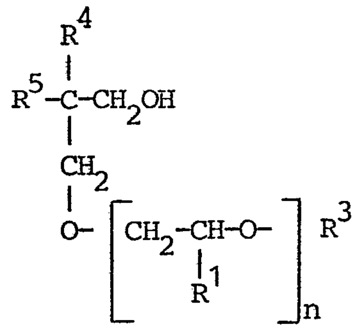

wobei $R^1$ ein Wasserstoffrest oder eine, gegebenenfalls halogenierte, Kohlenwasserstoffgruppe mit 1 bis 30 Kohlenstoffatomen oder die Gruppe $-CH_2OR^2$, in der $R^2$ eine Alkyl- oder Alkenylgruppe bedeutet, und wobei innerhalb des polymeren Moleküls die Gruppe $R^1$ gleich oder verschieden ist,

$R^3$ eine, gegebenenfalls wieder abspaltbare, Schutzgruppe,

$R^4$ ein Wasserstoff-, Alkyl- oder Arylrest,

$R^5$ ein Hydroxyl- oder Hydroxymethylrest und

n eine ganze Zahl > 1 ist.

Die Gruppe $R^1$ kann ein Wasserstoffrest sein. Es handelt sich dann bei dem Oxiran um Ethylenoxid. Die Gruppe $R^1$ kann eine Alkylgruppe mit 1 bis 30 Kohlenstoffatomen sein. Bevorzugt ist $R^1$ eine Alkylgruppe mit 1 bis 4, insbesondere 1 bis 2 Kohlenstoffatomen. Ist $R^1$ eine Methylgruppe, handelt es sich um Propylenoxid. Die Alkylgruppe kann gegebenenfalls halogeniert sein und z.B. Chlorreste aufweisen. Beispiel einer solchen halogenierten Gruppe $R^1$ ist die $CH_2Cl$-Gruppe. Die Alkylgruppe kann auch ungesättigt sein. Beispiel einer solchen ungesättigten Alkylgruppe ist die Vinyl- oder Allylgruppe.

Die Gruppe $R^1$ kann auch eine Phenylgruppe, die gegebenenfalls substituiert ist, sein. Im einfachsten Falle handelt es sich bei dem Oxiran dann um Styroloxid.

Die Gruppe $R^1$ kann auch die Bedeutung der Gruppe $-CH_2-O-R^2$ haben, wobei $R^2$ eine Alkyl- oder Alkenylgruppe ist. Beispiel einer geeigneten Alkylgruppe ist die Butylgruppe; Beispiel einer geeigneten Alkenylgruppe ist die Vinyl- oder Allylgruppe.

Innerhalb des polymeren Moleküls kann die Bedeutung der Gruppe $R^1$ gleich oder verschieden sein. Der Polyether kann somit z.B. ganz oder teilweise aus Oxyethyleneinheiten aufgebaut sein. Von Interesse sind ferner Verbindungen, bei denen das Polymerisat aus Oxyethylen- und Oxypropyleneinheiten aufgebaut ist, bei denen die Einheiten statistisch oder in Blöcken im Molekül angeordnet sein können. Es sind aber auch alle anderen Kombinationen denkbar und möglich und werden im wesentlichen von den Eigenschaften bestimmt, die das herzustellende Polymerisat aufweisen soll.

$R^3$ ist eine, gegebenenfalls wieder abspaltbare, Schutzgruppe. Dies wird dadurch eingeführt, daß man vor der Acetal- oder Ketalspaltung die endständige Hydroxylgruppe mit einer Verbindung umsetzt, welche monofunktionell ist und eine gegenüber der Hydroxylgruppe reaktive Gruppe aufweist. Dabei kann die Reaktion durch Substitution oder Addition erfolgen. Beispiel einer Substitutionsreaktion ist die Umsetzung der Hydroxylgruppe oder einer durch Umalkoholisierung mit einem niederen Alkalialkoholat eingeführten Alkoholatgruppe mit einem Alkylhalogenid, z.B. Methylchlorid, oder einem Alkylarylhalogenid, z.B. Benzylchlorid, wobei der Kohlenwasserstoffrest 1 bis 12 Kohlenstoffatome aufweisen kann. Beispiel einer geeigneten Additionsreaktion ist die Umsetzung der Hydroxylgruppe des Polyethers mit einem organischen Monoisocyanat, z.B. einem Alkyl- oder Arylmonoisocyanat, oder einer Vinylverbindung, z.B. Acrylnitril, Acrylsäuremethylester oder Methylvinylketon.

Es ist dem Fachmann verständlich, daß man die 1.2-Alkandiole und/oder das Phenylethan-1.2-diol und die Polyalkylenoxide, die am Startalkohol zwei freie Hydroxylgruppen aufweisen, entweder in Form ihres Gemisches mit den difunktionellen Verbindungen umsetzen kann, wobei man Polymerisate mit statistisch verteilten Seitenketten erhält, oder daß man die Alkandiole, das Phenylethan-1.2-diol und die vicinal oder mit zwei benachbarten Hydroxylgruppen versehenen Polyoxyalkylendiole (1.2- bzw. 1.3-Diole) nacheinander mit den difunktionellen Verbindungen umsetzt, wobei man Polymerisate erhält, bei denen die unterschiedlichen Seitenketten alternierend enthalten sind oder welche die unterschiedlichen Seitenketten in blockartiger Anordnung aufweisen.

Die Variationsbreite des erfindungsgemäßen Verfahrens wird noch dadurch erhöht, daß man zur Herstellung eines Polymerisates Mischungen verschiedener 1.2-Alkandiole und ebenso Mischungen verschiedener Polyoxyalkylendiole mit den difunktionellen Verbindungen umsetzen kann.

Es hat sich weiter gezeigt, daß sich das erfindungsgemäße Verfahren mit noch besseren Ausbeuten und übersichtlicher durchführen läßt, wenn man es in mehreren Stufen mit unterschiedlichen Molverhältnissen der Reaktionspartner durchführt. Man erhält dabei Polymerisate, deren analytisch bestimmtes Molgewicht dem theoretisch errechenbaren Molgewicht besser als beim einstufigen Verfahren entspricht. Man kann durch die mehrstufige Verfahrensweise auch Polymerisate mit voneinander verschiedenen Seitenketten, z.B. mit alternierenden Seitenketten, herstellen.

Dieses Verfahren soll am Beispiel der Umsetzung eines 1.2-Alkandiols mit einer difunktionellen Verbindung erläutert werden: So kann man in der ersten Stufe die 1.2-Alkandiole mit den reaktiven difunktionellen Verbindungen in einem molaren Verhältnis von 1 : > 1 bis 1 : 2 und das erhaltene Zwischenprodukt in einer zweiten Stufe mit dem 1.2-Alkandiol in einem molaren Verhältnis von 1 : 2 bis 2 : 1 umsetzen und gegebenenfalls mit diesem Verfahrensprodukt die Stufen 1 und/oder 2 bis zur Erzielung des gewünschten Molekulargewichtes wiederholen. Dabei kann man auch in der ersten und zweiten Verfahrensstufe 1.2-Alkandiole unterschiedlichen Aufbaus einsetzen oder z.B. in der zweiten Stufe das 1.2-Alkandiol ganz oder teilweise durch das Polyoxyalkylendiol ersetzen.

Es ist natürlich auch möglich, bei vorgegebenem Molekulargewicht den Gehalt an langkettigen Alkylgruppen und Polyalkylenoxidketten dadurch herabzusetzen, daß man bis zu 80 Mol-% der Summe der 1.2-Alkandiole, des Phenylethan-1.2-diols und der Polyoxyalkylendiole mit freien Hydroxylgruppen am Startalkohol durch difunktionelle Alkohole ersetzt. Hierdurch tritt ein gewisser Verdünnungseffekt innerhalb des Moleküls ein. Geeignete difunktionelle Alkohole sind z.B. Ethylenglykol, Propandiol-1.2, Propandiol-1.3, Butandiol-1.4, Hexandiol-1.6, Dihydroxymethylphenylen und $\alpha,\omega$-Polyoxyalkylendiole oder mit endständigen Hydroxylgruppen versehene Polyoxyalkylendiole.

Das erfindungsgemäße Verfahren zeichnet sich durch eine hohe Variationsbreite der Reaktionspartner aus. Die im folgenden genannten Verbindungen können deshalb nur als Beispiele möglicher Polymerisate angesehen werden.

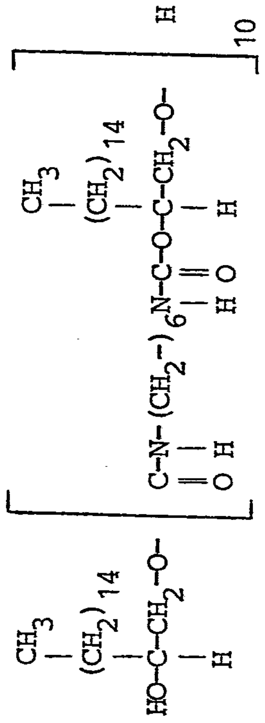

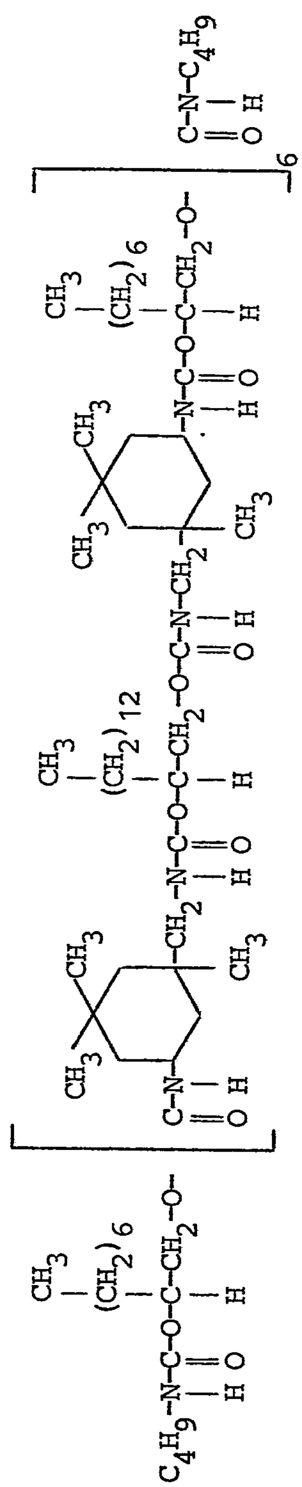

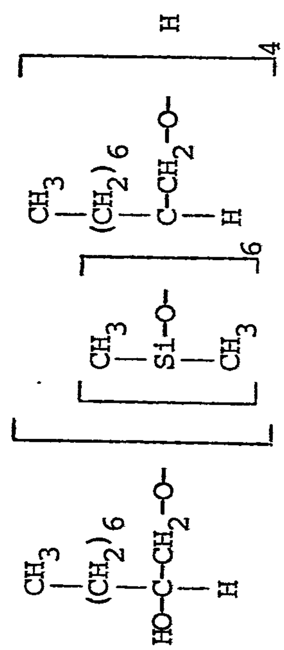

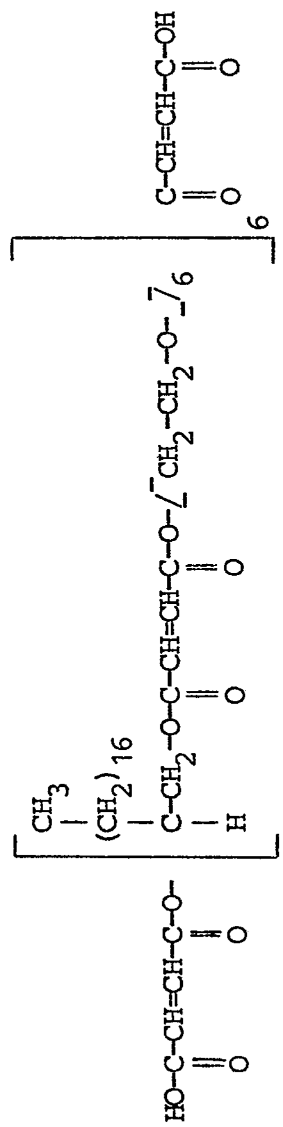

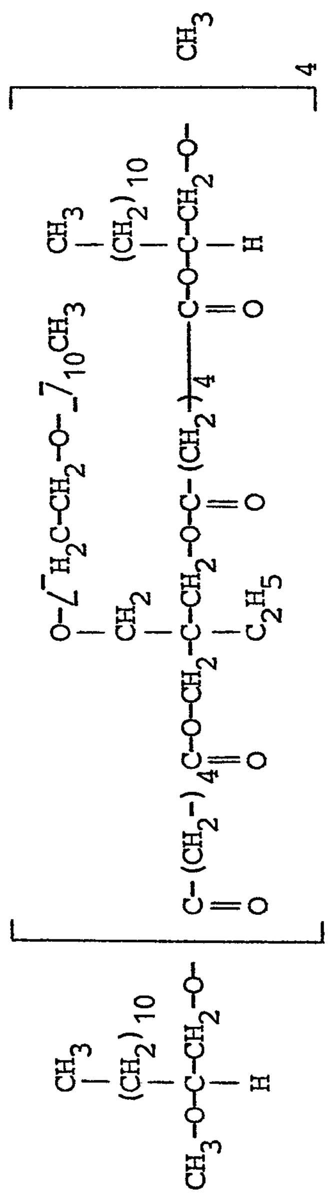

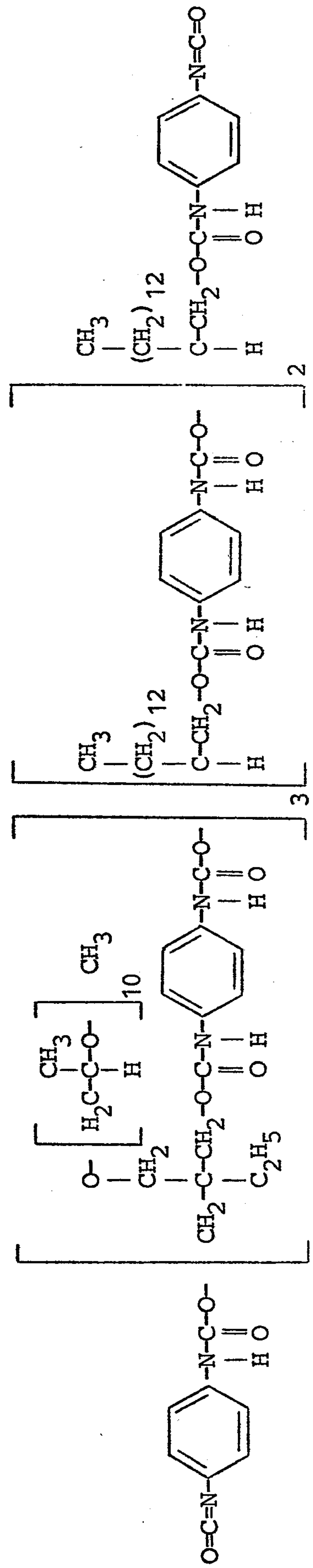

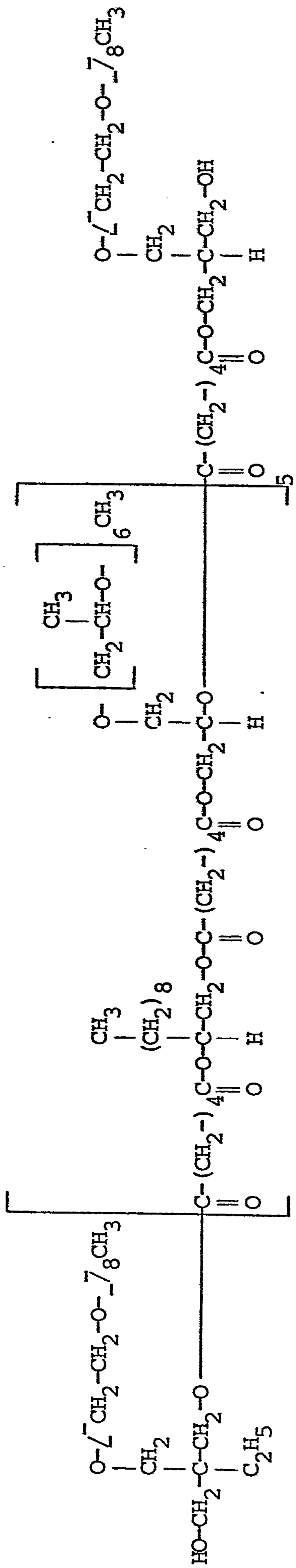

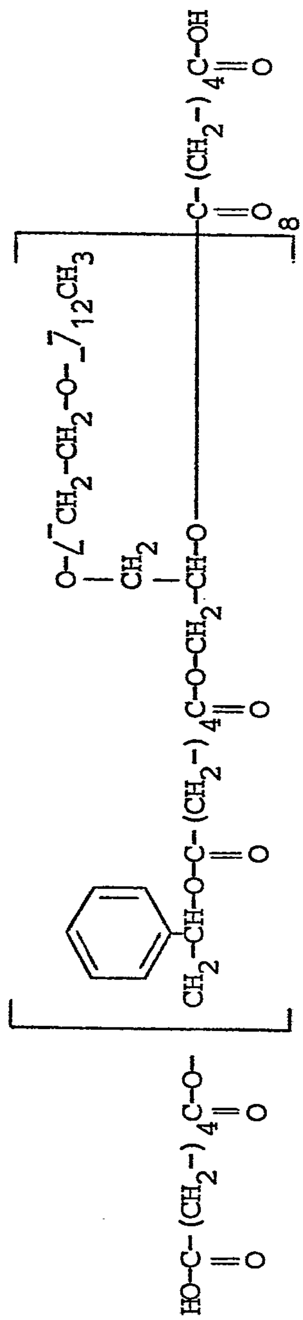

Es hat sich gezeigt, daß bei verschiedenen Verwendungsmöglichkeiten im polymeren Molekül noch vorhandene reaktive Gruppen stören können. Dies gilt insbesondere, wenn man die erfindungsgemäß hergestellten Produkte Komponenten zusetzt, welche selbst Gruppen aufweisen, die mit den reaktiven Gruppen der Polymerisate zu reagieren in der Lage sind. Mitunter verbessern sich aber auch bestimmte Eigenschaften der erfindungsgemäß hergestellten Produkte, wenn sie frei von reaktiven Gruppen sind. Es werden beispielsweise die entschäumenden Eigenschaften der erfindungsgemäß hergestellten Produkte noch dadurch gesteigert, daß man die endständigen Hydroxylgruppen in an sich bekannter Weise blockiert. Dies kann beispielsweise durch die Umsetzung mit einem Monoisocyanat, z.B. Butylisocyanat, oder durch Veretherung, z.B. mit einem Alkylhalogenid, geschehen.

Die Eigenschaften der erfindungsgemäß hergestellten Verbindungen sind im wesentlichen durch die Anwesenheit der langkettigen Alkylreste oder der Arylreste und gegebenenfalls der Polyalkylenoxidketten und ihrer speziellen Anordnung im Kammpolymerisat bestimmt. Die Verbindungen eignen sich zum Dismulgieren von Erdölemulsionen, zur Entschäumung wäßriger und nichtwäßriger Systeme sowie zur Stabilisierung von Kunststoff, z.B. von Polyurethanschäumen. Sie sind als Trennmittel und Flotationshilfsmittel geeignet. Enthalten die erfindungsgemäß hergestellten Verbindungen höhere Anteile an Polyalkylenoxidketten und steigt damit ihre Hydrophilie, sind sie entsprechend ihres HLB-Wertes auch als Mittel zum Stabilisieren von Emulsionen und Dispersionen geeignet. Sie können als Lackverlaufsmittel und als Textilhilfsmittel verwendet werden.

Erfindungsgemäß hergestellte Polymerisate, deren Hydroxylgruppen nicht blockiert sind, sind ferner wertvolle Ausgangsprodukte zur Herstellung von Lackrohstoffen, z.B. auf Polyurethanbasis. Sie können ferner zur Herstellung von Polyesterharzen eingesetzt werden.

Das erfindungsgemäße Verfahren wird durch die folgenden Beispiele noch näher erläutert.

## Beispiel 1

In 444 g (ca. 2 Mol) Isophorondiisocyanat werden 0,6 g Triethylendiamin und 0,6 g Dibutylzinndilaurat gelöst. In diese auf 80°C erhitzte Lösung werden unter Rühren in einer Reinstickstoffatmosphäre über 2 h tropfenweise 202 g (ca. 1 Mol) auf 80°C erwärmtes Dodecan-1.2-diol gegeben. Danach wird für 6 h bei 90°C eine Nachreaktion durchgeführt. Der Isocyanatgehalt beträgt 12,6 %, was nahezu einer theoretischen Ausbeute entspricht.

In 646 g (ca. 1 Mol) des erhaltenen Diisocyanates werden 0,8 g Triethylendiamin und 0,8 g Dibutylzinndilaurat gelöst. Diese Lösung wird unter Rühren in einer Reinstickstoffatmosphäre über 2 h bei 80°C zu 215 g (ca. 1,07 Mol) auf 80°C erwärmten Dodecan-1.2-diols tropfenweise gegeben. Danach wird für 6 h bei 90°C eine Nachreaktion durchgeführt.

Das erhaltene Produkt ist viskos, trübe und gelblich gefärbt. Die Hydroxylzahl beträgt 9,1, was bei einer angenommenen Funktionalität von 2 einem Molekulargewicht von 12 330 entspricht.

## Beispiel 2

a) Herstellung eines Polyalkylenoxid-1.2-diols (nicht erfindungsgemäß).

In 132 g (ca. 1 Mol) 2.2-Dimethyl-4-hydroxymethyl-1.3-dioxolan werden bei 80°C 7 g Kaliummethylat in einem Reaktor mit einem zwangsfördernden Umlaufsystem in Lösung gebracht. Nach sorgfältiger Spülung mit Reinstickstoff wird der Reaktor auf 110°C geheizt und ein Gemisch aus 1145 g (ca. 26,0 Mol) Ethylenoxid und 793 g (13,7 Mol) Propylenoxid so schnell zugegeben, daß die Reaktorinnentemperatur einen Wert von 120°C und der Druck einen Wert von 3 bar nicht überschreiten. Nach vollständiger Einleitung des Alkylenoxidgemisches wird die Temperatur so lange auf 120°C gehalten, bis ein gleichbleibender Druck das Ende der Nachreaktion anzeigt; danach wird bei 80 bis 90°C unter Vakuum die Entfernung von Restmonomeren vorgenommen. Anschließend wird mit 10 %iger wäßriger Phosphorsäure und mit $NaH_2PO_4$ auf einen pH-Wert von 7 eingestellt. Schließlich wird das Wasser bei 80 bis 90°C in einem Vakuum von 13,3 mbar abdestilliert und entstandenes Salz mit Hilfe eines Filterhilfsmittels auf Silicatbasis abfiltriert.

Die Hydroxylzahl des farblosen klaren Produktes beträgt 30,2, was bei einer angenommenen Funktionalität von 1 einem Molekulargewicht von 1860 entspricht.

Zu 1860 g (ca. 1 Mol) des erhaltenen Polyethers werden 243 g methanolische, 30 %ige $NaOCH_3$-Lösung (ca. 1,35 Mol Natriummethylat) tropfenweise zugesetzt und die Mischung auf 100 bis 120°C aufgeheizt. Unter Vakuum wird das Methanol vollständig abdestilliert. Nach dem Belüften mit Stickstoff wird so schnell Methylchlorid eingeleitet, daß die Temperatur im Reaktor einen Wert von 120°C nicht überschreitet. Der Verlauf der Reaktion wird durch die häufige Bestimmung der Alkali-Zahl beobachtet. Die Reaktion gilt als beendet, wenn die Alkali-Zahl zwischen 0 und 1 liegt. Danach wird nach Zusatz von 15 %iger wäßriger Phosphorsäure ein pH-Wert von 5 bis 6 eingestellt und das ausgefallene Kochsalz mit Hilfe eines Filterhilfsmittels auf Silicatbasis durch Filtration entfernt.

Die Hydroxylzahl des erhaltenen Produktes beträgt ca. 0,4.

Der erhaltene blockierte Polyether wird im Gewichtsverhältnis 2 : 1 : 1 mit 1 n wäßriger Salzsäure und Ethanol vermischt und für 4 h bei 80°C unter Rückfluß erhitzt. Nach Beendigung der Reaktion werden alle flüchtigen Bestandteile im Bereich von 70 bis 80°C bei einem Vakuum von 13,3 mbar abdestilliert; Restmengen an Wasser werden azeotrop mit Toluol entfernt.

Die Hydroxylzahl des erhaltenen klaren, leicht gelblichen Produktes beträgt 55,0, was bei einer angenommenen Funktionalität von 2 einem Molekulargewicht von 2040 entspricht.

b) Durchführung des erfindungsgemäßen Verfahrens

1632 g (ca. 0,8 Mol) des gemäß 2 a) erhaltenen Polyether-1.2-diols werden unter Reinstickstoff in die Lösung von 1,8 g Triethylendiamin und 1,8 g Dibutylzinndilaurat in 355 g (ca. 1,6 Mol) Isophorondiisocyanat tropfenweise innerhalb von 2 h bei 90°C gebracht. Danach wird für 6 h bei 90°C nachreagiert.

Das erhaltene Produkt wird nach weiterer Zugabe von 0,9 g Triethylendiamin und 0,9 g Dibutylzinndilaurat in einer Reinstickstoffatmosphäre

über 2 h tropfenweise zu 258 g (ca. 1 Mol) auf 80°C erwärmtes n-Hexadecandiol-1.2 gegeben. Es wird für weitere 6 h bei 90°C nachreagiert.

Das erhaltene Produkt ist flüssig, hochviskos und leicht gelblich gefärbt. Die Hydroxylzahl beträgt 12,2, was bei einer angenommenen Funktionalität von 2 einem Molekulargewicht von 9230 entspricht.

Beispiel 3

Gemäß Beispiel 2 a) wird ein Polyalkylenoxid-1.2-diol unter ausschließlicher Verwendung von Ethylenoxid mit einem Molekulargewicht von 825 hergestellt. 743 g (ca. 0,9 Mol) dieses Polyethers werden der Lösung von 1,1 g Triethylendiamin und 1,1 g Dibutylzinndilaurat in 303 g (ca. 1,8 Mol) Hexamethylendiisocyanat tropfenweise innerhalb von 2 h bei 90°C in einer Reinstickstoffatmosphäre zugetropft. Danach wird für 6 h bei 90°C nachreagiert.

Das erhaltene Produkt wird nach weiterer Zugabe von 0,5 g Triethylendiamin und 0,5 g Dibutylzinndilaurat in einer Reinstickstoffatmosphäre über 2 h zu 258 g (ca. 1 Mol) Hexadecandiol-1.2 bei 90°C tropfenweise gegeben. Es wird für weitere 6 h bei 90°C nachreagiert.

Das erhaltene Produkt ist flüssig, viskos und gelblich gefärbt. Die Hydroxylzahl beträgt 10,0, was bei einer angenommenen Funktionalität von 2 einem Molekulargewicht von 11 200 entspricht.

Beispiel 4

In 1020 g (ca. 0,5 Mol) des gemäß Beispiel 2 a) hergestellten Polyether-1.2-diols werden 144 g (ca. 1 Mol) Octandiol-1.2 und 101 g (0,5 Mol) Dodecandiol-1.2 mit Hilfe eines scherkraftreichen Rührers bei 70°C eindispergiert. Das entstehende Gemisch wird tropfenweise über 2 h in die Lösung von 1,6 g Triethylendiamin und 1,6 g Dibutylzinndilaurat in 400 g (ca. 1,8 Mol) Isophorondiisocyanat bei 90°C gegeben. Es wird für weitere 8 h bei 90°C nachreagiert.

Das erhaltene Produkt ist flüssig, viskos und gelblich gefärbt. Die Hydroxylzahl beträgt 21,4, was bei einer angenommenen Funktionalität

0103147

von 2 einem Molekulargewicht von 5250 entspricht.

## Beispiel 5

a) Herstellung des Polymerblocks A mit endbegrenzenden Isocyanatgruppen

248 g (ca. 0,3 Mol) des gemäß Beispiel 3 hergestellten Polyethylenoxid-1.2-diols werden tropfenweise über 2 h in die Lösung von 0,25 g Triethylendiamin und 0,28 g Dibutylzinndilaurat in 70 g (0,4 Mol) Toluylendiisocyanat bei 90°C eingebracht. Es wird für 5 h bei 90°C nachreagiert. Der Isocyanatgehalt des erhaltenen Produktes beträgt 2,5 %, was nahezu dem theoretischen Wert entspricht.

b) Herstellung des Polymerblocks B mit endbegrenzenden Hydroxylgruppen

129 g (ca. 0,5 Mol) Hexadecandiol-1.2 werden tropfenweise über 2 h in die Lösung von 0,23 g Triethylendiamin und 0,23 g Dibutylzinndilaurat in 70 g (ca. 0,4 Mol) Toluylendiisocyanat bei 90°C gegeben. Es wird für weitere 4 h bei 90°C nachreagiert. Die Hydroxylzahl des erhaltenen Zwischenproduktes beträgt 58,60, was bei einer angenommenen Funktionalität von 2 einem Molekulargewicht von 1915 entspricht.

c) Herstellung eines 3-Blockcopolymeren

In 1197 g (ca. 0,4 Mol) des gemäß 5 a) erhaltenen Polymerblocks A werden 2 g Triethylendiamin und 2 g Dibutylzinndilaurat gelöst. Diese Lösung wird auf 90°C erhitzt und dazu unter Rühren in einer Reinstickstoffatmosphäre 1532 g (ca. 0,8 Mol) des gemäß 5 b) erhaltenen Polymerblocks B über 3 h gegeben und die Mischung für 9 h auf 90°C erhitzt.

Das erhaltene Produkt ist flüssig, hochviskos, leicht trübe und leicht gelblich gefärbt. Die Hydroxylzahl beträgt 16,6, was bei einer angenommenen Funktionalität von 2 einem Molekulargewicht von 6750 entspricht.

## Beispiel 6

1830 g (ca. 10 Mol) Adipinsäuredichlorid werden auf 120°C unter Reinstickstoff erwärmt. Sodann werden 1010 g (ca. 5 Mol) Dodecandiol-1.2 über 2 h zugegeben und danach für weitere 4 h auf 120°C erhitzt. Der

entstehende Chlorwasserstoff wird abdestilliert. In einer zweiten Stufe werden in das erhaltene Produkt tropfenweise 1214 g (ca. 6 Mol) Dodecandiol-1.2 über 2 h eingebracht und zur Nachreaktion nochmals unter Entfernung des Chlorwasserstoffs auf 120°C erhitzt.

Das erhaltene Produkt ist mittelbraun gefärbt und leicht trübe. Die Hydroxylzahl beträgt 34, was bei einer angenommenen Funktionalität von 2 einem Molekulargewicht von 3300 entspricht.

## Beispiel 7

183 g (ca. 1 Mol) Adipinsäuredichlorid werden auf 120°C unter Reinstickstoff erwärmt, sodann werden 69,1 g (ca. 0,5 Mol) 1-Phenyl-1.2-ethandiol-1.2 über 2 h zugegeben und danach für weitere 4 h auf 120°C erhitzt. Der entstehende Chlorwasserstoff wird abdestilliert. In einer zweiten Stufe werden in das erhaltene Produkt tropfenweise 495 g (ca. 0,6 Mol) des gemäß Beispiel 3 hergestellten Polyethylenoxid-1.2-diols über 2,5 h eingebracht und zur Nachreaktion nochmals unter Entfernung des Chlorwasserstoffs auf 120°C erhitzt.

Das erhaltene Produkt ist mittelbraun gefärbt und leicht trübe. Die Hydroxylzahl beträgt 19, was bei einer angenommenen Funktionalität von 2 einem Molekulargewicht von 5905 entspricht.

Patentansprüche:

1. Verfahren zur Herstellung von Polymerisaten mit seitenständig gebundenen langkettigen Alkylresten und/oder Arylresten und gegebenenfalls ebenfalls seitenständig gebundenen Polyalkylenoxidketten, dadurch gekennzeichnet, daß man 1.2-Alkandiole mit 6 bis 20 Kohlenstoffatomen und/oder Phenylethan-1.2-diol mit in bezug auf die Hydroxylgruppen reaktiven difunktionellen Verbindungen in an sich bekannter Weise umsetzt und gegebenenfalls bis zu 75 Mol-% der Alkandiole und/oder des Phenylethan-1.2-diols durch Polyalkylenoxide ersetzt, die am Startalkohol zwei freie Hydroxylgruppen aufweisen.

2. Verfahren nach Anspruch 1, dadurch gekennzeichnet, daß man die 1.2-Alkandiole und/oder das Phenylethan-1.2-diol und die Polyalkylenoxide statistisch als Gemisch oder alternierend bzw. blockbildend nacheinander mit den difunktionellen Verbindungen umsetzt.

3. Verfahren nach Anspruch 1 oder 2, dadurch gekennzeichnet, daß man 1.2-Alkandiole mit 8 bis 16 Kohlenstoffatomen einsetzt.

4. Verfahren nach einem oder mehreren der vorhergehenden Ansprüche, dadurch gekennzeichnet, daß man als Polyalkylenoxide Verbindungen der allgemeinen Formel

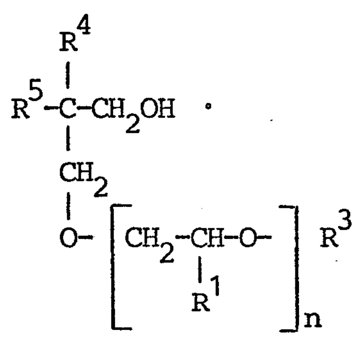

wobei $R^1$ ein Wasserstoffrest oder eine, gegebenenfalls halogenierte, Kohlenwasserstoffgruppe mit 1 bis 30 Kohlenstoffatomen oder die Gruppe $-CH_2OR^2$, in der $R^2$ eine Alkyl- oder Alkenylgruppe bedeutet, und wobei innerhalb des polymeren Moleküls die Gruppe $R^1$ gleich oder verschieden ist,

$R^3$ eine, gegebenenfalls wieder abspaltbare, Schutzgruppe,

$R^4$ ein Wasserstoff-, Alkyl- oder Arylrest,
$R^5$ ein Hydroxyl- oder Hydroxymethylrest und
n eine ganze Zahl > 1 ist,

einsetzt.

5. Verfahren nach einem oder mehreren der vorhergehenden Ansprüche, dadurch gekennzeichnet, daß man als difunktionelle Verbindungen solche einsetzt, deren reaktive Gruppen mit den Hydroxylgruppen in Form einer Additions- oder Kondensationsreaktion reagieren.

6. Verfahren nach Anspruch 5, dadurch gekennzeichnet, daß man als difunktionelle Verbindungen organische Diisocyanate einsetzt.

7. Verfahren nach Anspruch 5, dadurch gekennzeichnet, daß man als difunktionelle Verbindungen Dihalogen- oder -alkoxysilane oder -siloxane verwendet.

8. Verfahren nach Anspruch 5, dadurch gekennzeichnet, daß man als difunktionelle Verbindungen Dicarbonsäuren, deren Anhydride, Säurechloride oder Ester von aliphatischen Alkoholen mit 1 bis 3 Kohlenstoffatomen verwendet.

9. Weiterausbildung des Verfahrens nach einem oder mehreren der vorhergehenden Ansprüche, dadurch gekennzeichnet, daß man bis zu 80 Mol-% der Summe der 1.2-Alkandiole, des Phenylethan-1.2-diols und der Polyalkylenoxide durch difunktionelle Alkohole mit endständigen Hydroxylgruppen in $\alpha,\omega$-Stellung ersetzt.

10. Weiterausbildung des Verfahrens nach einem oder mehreren der vorhergehenden Ansprüche, dadurch gekennzeichnet, daß man die endständigen funktionellen Gruppen der Verfahrensprodukte in an sich bekannter Weise blockiert.